# EUROPEAN PATENT APPLICATION

(11) **EP 4 656 268 A1**
(43) Date of publication of application: **03.12.2025**
(21) Application number: 25178061.5
(22) Date of filing: 21.05.2025
(51) Int. Cl.: B01D 45/08, B64D 13/06, F01D 25/32

(54) **ARCHITECTED LATTICE OF LATTICE COALESCER**

(30) Priority: 28.05.2024 US 202418675941
(71) Applicant: Hamilton Sundstrand Corporation, Charlotte, NC 28217-4578 (US)
(72) Inventor: BOSWORTH, Alexander, Simsbury, CT, 06070 (US); KRAUTH, Kayla, Weatogue, CT, 06089 (US); COLSON, Darryl, West Suffield, 06093 (US); ARMY, Donald E., Enfield, CT, 06082 (US)
(74) Representative: Dehns

(57) **Abstract**

A lattice coalescer is provided and includes an architected lattice having a cylindrical shape with an upstream end and a downstream end. The architected lattice includes a solid outer body and an interior body disposed within the solid outer body and substantially filled in three dimensions with tessellated unit cells. The tessellated unit cells are arranged with respect to one another in a cell map such that a fog-laden airflow moving through the architected lattice from the upstream end to the downstream end exhibits a pressure drop of 2 psi or less and formation of water droplets of 10-40 microns.

## Description

### BACKGROUND

The present disclosure relates to water extraction systems of environmental control systems (ECSs) of aircraft and, in particular, to an architected lattice of a lattice coalescer of a mid-pressure water extraction system of an aircraft ECS.

Heat exchangers are utilized in various applications to exchange thermal energy from a first fluid stream to a second fluid stream. For example, in an ECS of an aircraft, a heat exchanger can be utilized to exchange thermal energy between a relatively low-pressure and low-temperature RAM airflow and a relatively highpressure and high-temperature bleed air flow from a gas turbine engine compressor. Such thermal energy exchange cools the bleed air flow upstream of an air cycle machine of the ECS.

Further, in an ECS of an aircraft, heat exchangers can be utilized as condensers where relatively high-temperature and humid air is cooled by a cold airstream.

### SUMMARY

According to an aspect of the disclosure, a lattice coalescer is provided and includes an architected lattice having a cylindrical shape with an upstream end and a downstream end. The architected lattice includes a solid outer body and an interior body disposed within the solid outer body and substantially filled in three dimensions with tessellated unit cells. The tessellated unit cells are arranged with respect to one another in a cell map such that a fog-laden airflow moving through the architected lattice from the upstream end to the downstream end exhibits a pressure drop of 2 psi or less and formation of water droplets of 10-40 microns.

In accordance with additional or alternative embodiments, the tessellated unit cells are arranged uniformly throughout the interior body.

**In** accordance with additional or alternative embodiments, the architected lattice further includes solid swirl vanes with the tessellated unit cells disposed within interstitial regions between the solid swirl vanes.

**In** accordance with additional or alternative embodiments, the architected lattice further includes solid concentric rings with the tessellated unit cells disposed within interstitial regions between the solid concentric rings.

**In** accordance with additional or alternative embodiments, the tessellated unit cells have one or more of diamond configurations, body-centered cubic configurations, face-centered cubic configurations and octet configurations and the cell map exhibits one or more of rectangular cell mapping, cylindrical cell mapping and spherical cell mapping.

**In** accordance with additional or alternative embodiments, the cell map has one of an axial gradient and a radial gradient.

According to an aspect of the disclosure, a water extraction system of an environmental control system (ECS) of an aircraft is provided. The water extraction system includes a water extractor, a duct leading to an inlet of the water extractor and a lattice coalescer. The lattice coalescer includes an architected lattice, which is fittable in the duct and which has an upstream end and a downstream end. The architected lattice includes a solid outer body and an interior body disposed within the solid outer body and substantially filled in three dimensions with tessellated unit cells. The tessellated unit cells are arranged with respect to one another in a cell map such that a fog-laden airflow moving through the architected lattice from the upstream end to the downstream end exhibits a pressure drop of 2 psi or less and formation of water droplets of 10-40 microns.

**In** accordance with additional or alternative embodiments, the tessellated unit cells are arranged with respect to one another in the cell map to encourage radial flows of the water droplets of about ~40 degrees per inch of lattice length toward interior facing walls of the duct.

In accordance with additional or alternative embodiments, the water extraction system further includes a first turbine upstream from the duct and a second turbine downstream from the water extractor. The duct and the lattice coalescer are receptive of at least bleed airflow from the first turbine.

In accordance with additional or alternative embodiments, the tessellated unit cells of the architected lattice are arranged uniformly throughout the interior body.

In accordance with additional or alternative embodiments, the architected lattice further includes solid swirl vanes with the tessellated unit cells disposed within interstitial regions between the solid swirl vanes.

In accordance with additional or alternative embodiments, the architected lattice further includes solid concentric rings with the tessellated unit cells disposed within interstitial regions between the solid concentric rings.

In accordance with additional or alternative embodiments, the tessellated unit cells of the architected lattice have one or more of diamond configurations, body-centered cubic configurations, face-centered cubic configurations and octet configurations and the cell map of the architected lattice exhibits one or more of rectangular cell mapping, cylindrical cell mapping and spherical cell mapping.

In accordance with additional or alternative embodiments, the cell map has one of an axial gradient and a radial gradient.

According to an aspect of the disclosure, a method of additively manufacturing a lattice coalescer of a water extraction system including a water extractor and a duct leading to an inlet of the water extractor is provided. The method includes designing an architected lattice of the lattice coalescer to fit within the duct and to meet requirements for water extraction and additively manufacturing the architected lattice according to the designing such that the architected lattice includes a solid outer body and an interior body disposed within the solid outer body and substantially filled in three dimensions with tessellated unit cells and the tessellated unit cells are arranged with respect to one another in a cell map such that a fog-laden airflow moving through the architected lattice from the upstream end to the downstream end exhibits a pressure drop of 2 psi or less and formation of water droplets of 10-40 microns.

In accordance with additional or alternative embodiments, the tessellated unit cells of the architected lattice are arranged uniformly throughout the interior body.

In accordance with additional or alternative embodiments, the architected lattice further includes solid swirl vanes with the tessellated unit cells disposed within interstitial regions between the solid swirl vanes.

In accordance with additional or alternative embodiments, the architected lattice further includes solid concentric rings with the tessellated unit cells disposed within interstitial regions between the solid concentric rings.

In accordance with additional or alternative embodiments, the tessellated unit cells of the architected lattice have one or more of diamond configurations, body-centered cubic configurations, face-centered cubic configurations and octet configurations and the cell map of the architected lattice exhibits one or more of rectangular cell mapping, cylindrical cell mapping and spherical cell mapping.

In accordance with additional or alternative embodiments, the cell map has one of an axial gradient and a radial gradient.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a schematic illustration of a water extraction system for an ECS of an aircraft in accordance with embodiments;
FIG. 2 is a side view of a mid-pressure water extraction system with a lattice coalescer with uniformly arranged tessellated unit cells of the water extraction system of FIG. 1 in accordance with embodiments;
FIGS. 3A, 3B and 3C are various perspective views and a side view of the lattice coalescer of FIG. 2 in accordance with embodiments;
FIG. 4 is a side view of a mid-pressure water extraction system with a lattice coalescer with swirl vanes of the water extraction system of FIG. 1 in accordance with embodiments;
FIGS. 5A, 5B and 5C are various perspective views and a side view of the lattice coalescer of FIG. 4 in accordance with embodiments;
FIG. 6 is a side view of a mid-pressure water extraction system with a lattice coalescer with concentric rings of the water extraction system of FIG. 1 in accordance with embodiments;
FIGS. 7A, 7B and 7C are various perspective views and a side view of the lattice coalescer of FIG. 6 in accordance with embodiments.
FIGS. 8A, 8B, 8C and 8D are perspective views of unit cells configurations for tessellated unit cells in accordance with embodiments;
FIGS. 9A, 9B and 9C depict cell mapping configurations for tessellated unit cells in accordance with embodiments;
FIG. 10 is an axial view of an architected lattice of a lattice coalescer with a radial gradient in a cell mapping in accordance with embodiments;
FIG. 11 is an axial view of an architected lattice of a lattice coalescer with an axial gradient in a cell mapping in accordance with embodiments; and
FIG. 12 is a flow diagram illustrating a method of additively manufacturing a lattice coalescer of a water extraction system in accordance with embodiments.

### DETAILED DESCRIPTION

To remove fog that is entrained in an airflow of a water extraction system of an ECS of an aircraft, it is often necessary to condense the fog into droplets that can be collected before entering a sub-freezing section of the ECS. Currently, fog condensation in a water extraction system of an ECS of an aircraft is provided by a condensing heat exchanger that remove moisture from the airflow prior to the airflow entering the sub-freezing section of the ECS. Recently, water extraction systems have been updated to provide for a mid-pressure water extraction system in an ECS. This advancement provides for an opportunity to significantly reduce part count, weight, volume and cost.

Thus, as will be described below, an architected lattice of a lattice coalescer that can be additively manufactured is provided for use in a mid-pressure water extraction system of an ECS of an aircraft. The architected lattice has a significantly reduced part count, weight, volume and cost as compared to conventional condensing heat exchangers. If humid air enters a sub-freezing section of an ECS of an aircraft, there is a risk of ice formation that can reduce performance and cause blockages. Accordingly, the humid air needs to be dried before entering the sub-freezing section. The architected lattice described herein utilizes a section of duct with an architected lattice design to attract water droplets from an air stream and move them towards the wall of the duct for the water to be collected downstream in a water extractor.

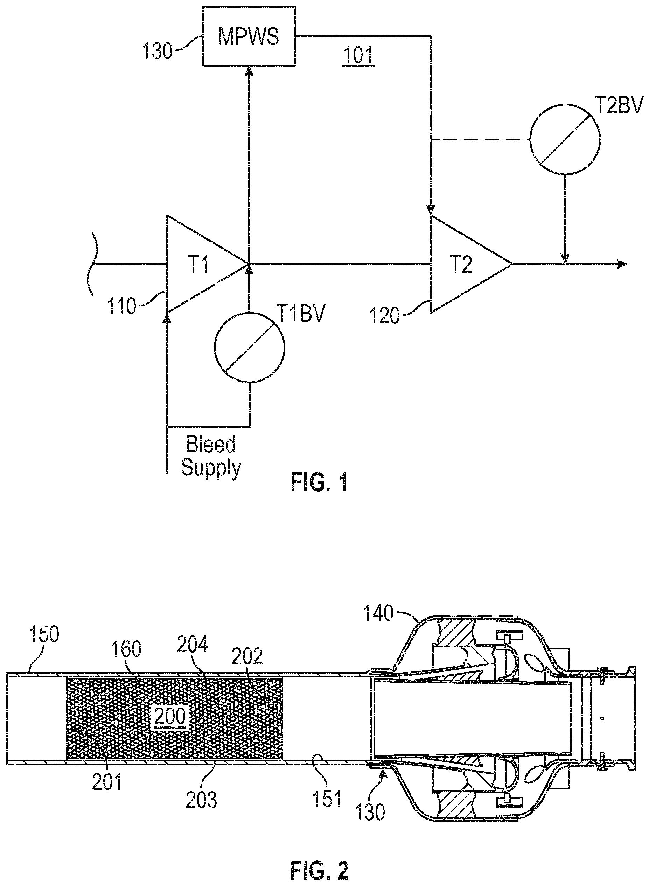

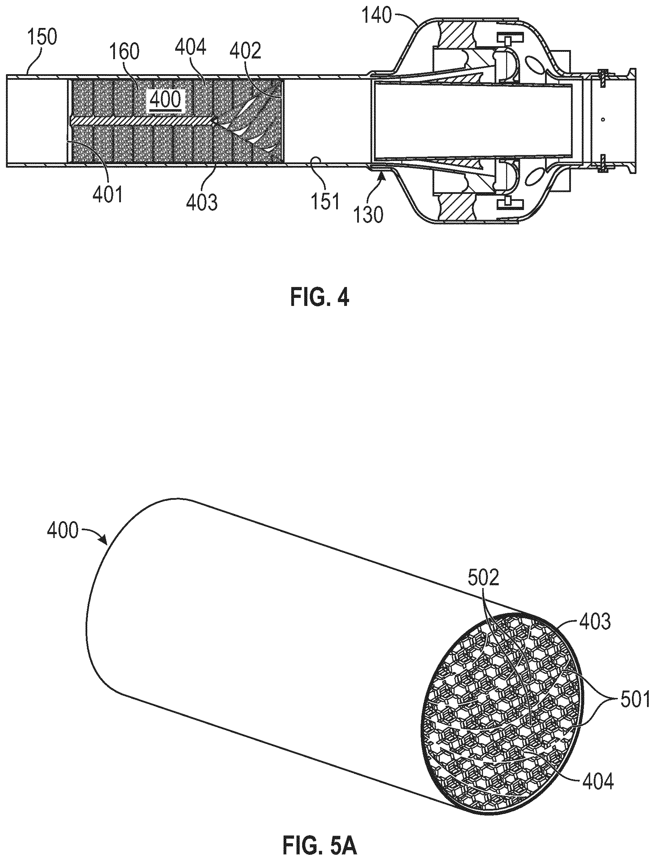

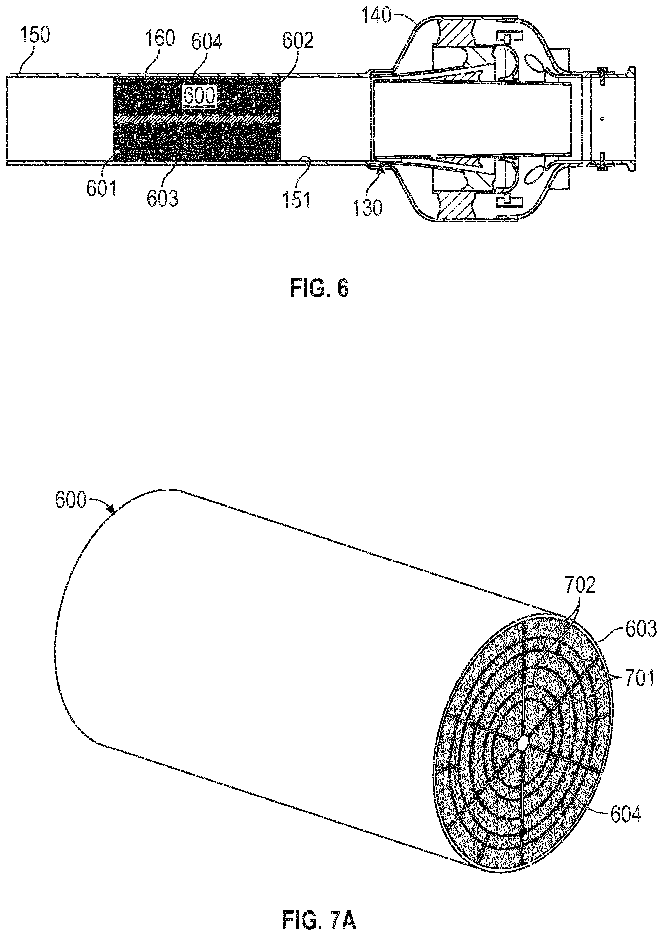

With reference to FIGS. 1, 2, 4 and 6, a water extraction system 101 of an ECS of an aircraft is provided. The water extraction system 101 includes a first turbine 110, a second turbine 120 that is tied to the first turbine 110 and mid-pressure water extraction system 130 that is interposed between the first turbine 110 and the second turbine 120. The mid-pressure water extraction system 130 includes a water extractor 140, a duct 150 leading to an inlet of the water extractor 140 and a lattice coalescer 160. The first turbine 110 is disposed upstream from the duct 150 and the second turbine 120 is disposed downstream from the water extractor 140. The duct 150 and the lattice coalescer 160 are receptive of at least bleed airflow from the first turbine 110. The bleed airflow can include a fog-laden airflow with moisture that needs to be removed upstream from the second turbine 120. The lattice coalescer 160 includes an architected lattice 200 (see FIG. 2), 400 (see FIG. 4) and 600 (see FIG. 6). The architected lattice 200/400/600 is fittable (i.e., tightly fittable) in the duct 150.

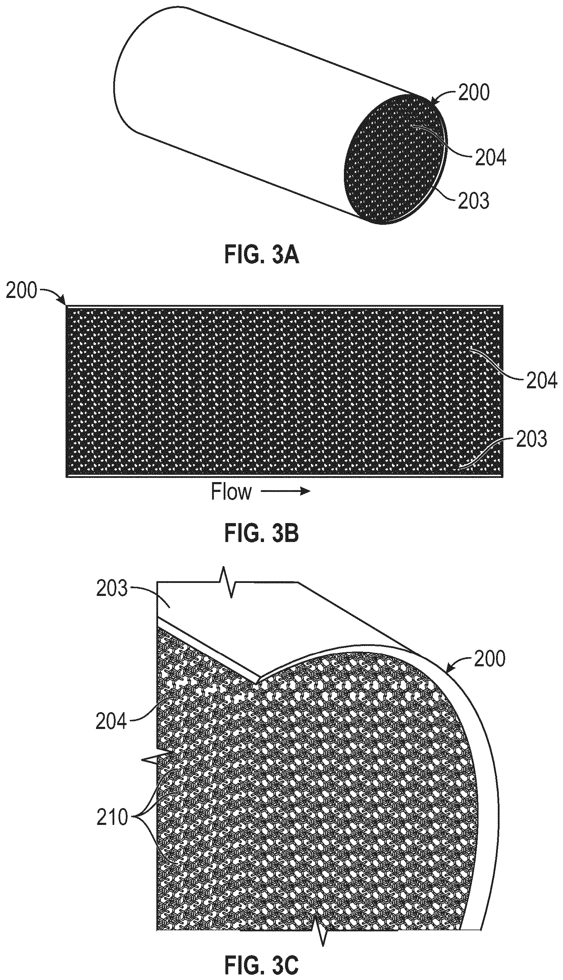

As shown in FIG. 2, the architected lattice 200 has an upstream end 201 and a downstream end 202 and includes a solid outer body 203 and an interior body 204 disposed within the solid outer body 203 and substantially filled in three dimensions with tessellated unit cells 210 (see FIG. 3C). The tessellated unit cells 210 are arranged with respect to one another in a cell map such that a fog-laden airflow as noted above moving through the architected lattice 200 from the upstream end 201 to the downstream end 202 exhibits a pressure drop of 2 psi or less and formation of water droplets of 10-40 microns. The tessellated unit cells 210 can be further arranged with respect to one another in the cell map to encourage radial flows of the water droplets toward interior facing walls 151 of the duct 150. This is turn increases the effectiveness of the water extractor 140. In some cases, the radial flows can be about ~40 degrees per inch of lattice length.

With continued reference to FIG. 2 and with additional reference to FIGS. 3A, 3B and 3C, the tessellated unit cells 210 of the architected lattice 200 are arranged uniformly throughout the interior body 204.

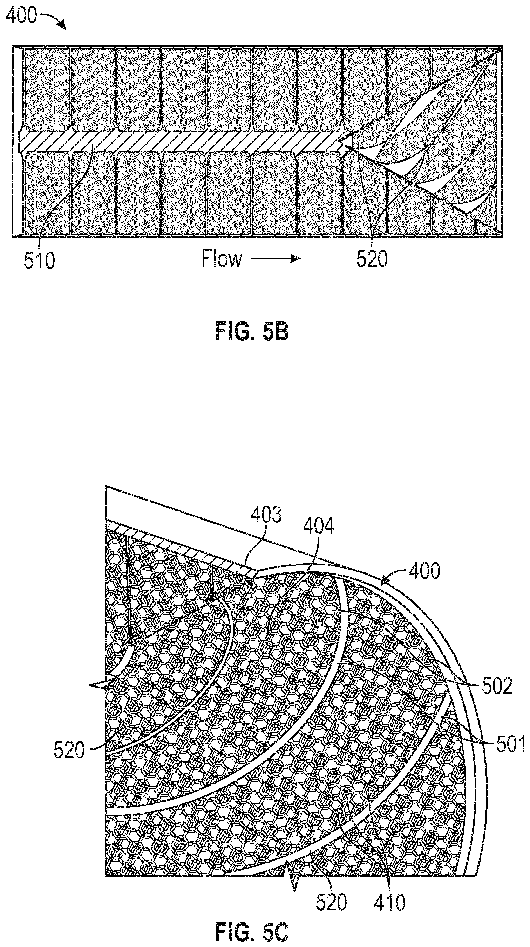

As shown in FIG. 4, the architected lattice 400 has an upstream end 401 and a downstream end 402 and includes a solid outer body 403 and an interior body 404 disposed within the solid outer body 403 and substantially filled in three dimensions with tessellated unit cells 410 (see FIG. 5C). The tessellated unit cells 410 are arranged with respect to one another in a cell map such that a fog-laden airflow as noted above moving through the architected lattice 400 from the upstream end 401 to the downstream end 402 exhibits a pressure drop of 2 psi or less and formation of water droplets of 10-40 microns. The tessellated unit cells 410 can be further arranged with respect to one another in the cell map to encourage radial flows of the water droplets toward interior facing walls 151 of the duct 150. This is turn increases the effectiveness of the water extractor 140. In some cases, the radial flows can be about ~40 degrees per inch of lattice length.

With continued reference to FIG. 4 and with additional reference to FIGS. 5A, 5B and 5C, the architected lattice 400 can further include solid swirl vanes 501 with the tessellated unit cells 410 disposed within interstitial regions 502 between the solid swirl vanes 501. In accordance with embodiments, the solid swirl vanes 501 can include a central solid vane 510 that extends along a central longitudinal axis of the architected lattice 400 and spiraling solid swirl vanes 520 that spiral outwardly from the central solid swirl vane 510 thus defining the interstitial regions 502 as interstitial spiral regions.

As shown in FIG. 6, the architected lattice 600 has an upstream end 601 and a downstream end 602 and includes a solid outer body 603 and an interior body 604 disposed within the solid outer body 603 and substantially filled in three dimensions with tessellated unit cells 610. The tessellated unit cells 610 are arranged with respect to one another in a cell map such that a fog-laden airflow as noted above moving through the architected lattice 600 from the upstream end 601 to the downstream end 602 exhibits a pressure drop of 2 psi or less and formation of water droplets of 10-40 microns. The tessellated unit cells 610 can be further arranged with respect to one another in the cell map to encourage radial flows of the water droplets toward interior facing walls 151 of the duct 150. This is turn increases the effectiveness of the water extractor 140. In some cases, the radial flows can be about ~40 degrees per inch of lattice length.

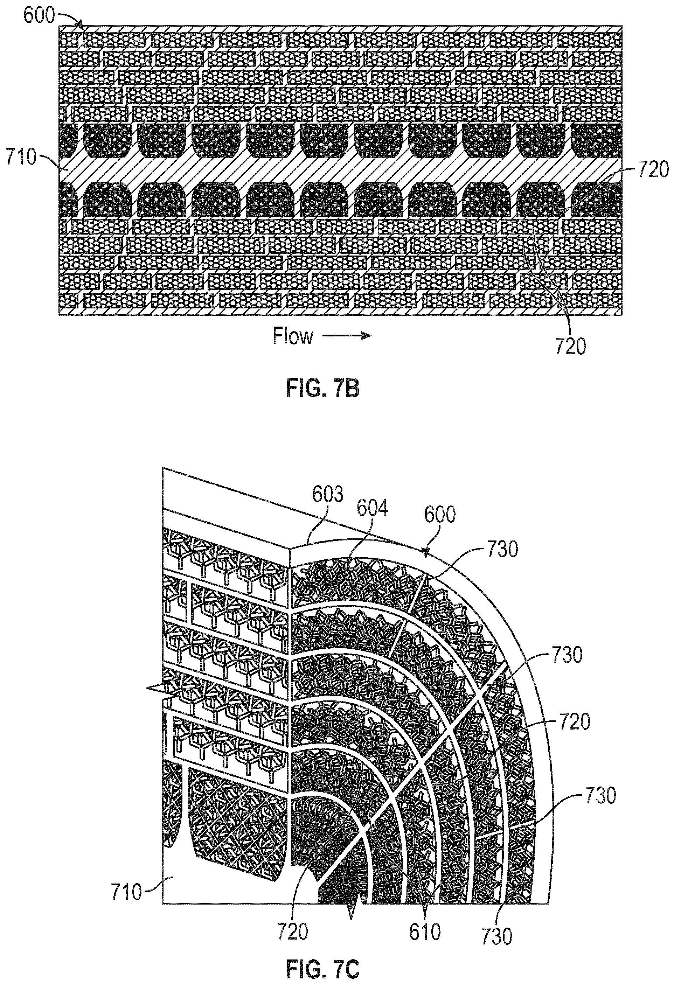

With continued reference to FIG. 6 and with additional reference to FIGS. 7A, 7B and 7C, the architected lattice 600 can further include solid concentric rings 701 with the tessellated unit cells 610 disposed within interstitial regions 702 between the solid concentric rings 701. In accordance with embodiments, the solid concentric rings 701 can include a central solid member 710 that extends along a central longitudinal axis of the architected lattice 600, concentric rings 720 surrounding the central solid member 710 and radial members 730 extending along a radial dimension of the architected lattice 600 thus defining the interstitial regions 702 as interstitial radial and arc-segmented regions.

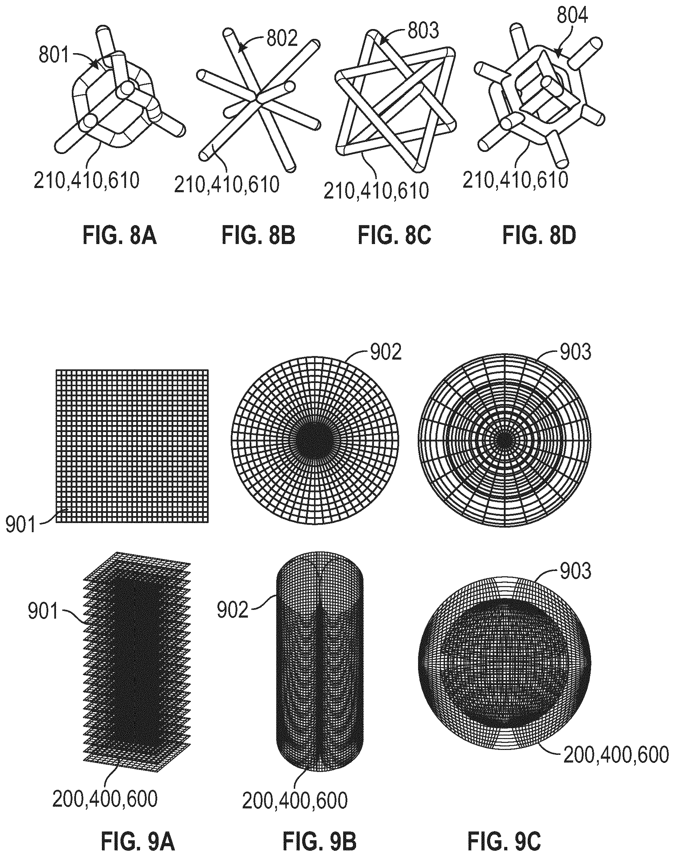

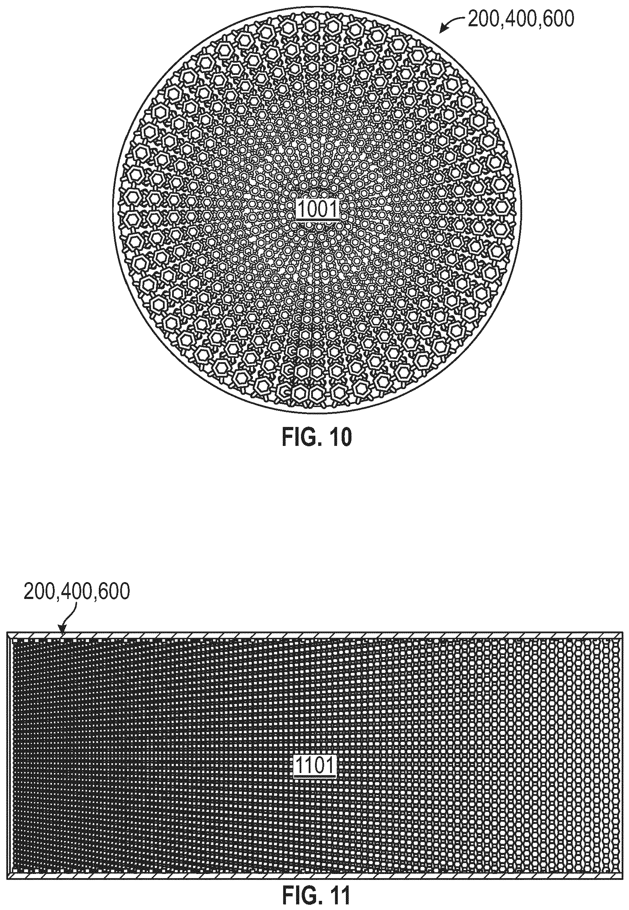

With reference to FIGS. 8A, 8B, 8C and 8D, the tessellated unit cells 210, 410 and 610 can have various configurations. These include, but are not limited to, diamond configurations 801 (see FIG. 8A), body-centered cubic configurations 802 (see FIG. 8B), face-centered cubic configurations 803 (see FIG. 8C) and octet configurations 804 (see FIG. 8D) and combinations thereof. With reference to FIGS. 9A, 9B and 9C, the cell map of the architected lattice 200, 400, 600 can have various configurations. These include, but are not limited to, rectangular cell mapping 901 (see FIG. 9A), cylindrical cell mapping 902 (see FIG. 9B) and spherical cell mapping 903 (see FIG. 9C) and combinations thereof. With reference to FIGS. 10 and 11, the cell map of the architected lattice 200, 400, 600 can have one of a radial gradient 1001 (see FIG. 10) and an axial gradient 1101 (see FIG. 11).

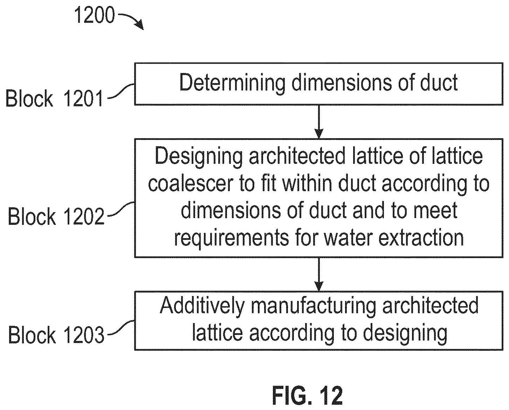

With reference to FIG. 12, a method 1200 of additively manufacturing a lattice coalescer of a water extraction system is provided where the water extraction system includes a water extractor and a duct leading to an inlet of the water extractor generally as described above. As shown in FIG. 12, the method 1200 includes determining dimensions of the duct (block 1201), designing an architected lattice of the lattice coalescer to fit (i.e., tightly fit) within the duct according to the dimensions of the duct and to meet requirements for water extraction (block 1202) and additively manufacturing the architected lattice according to the designing (block 1203). The requirements for water extraction can include fluid requirements such as, but not limited to, required pressure drop and required droplet size. The additively manufacturing of block 1203 can be executed such that the architected lattice includes a solid outer body and an interior body disposed within the solid outer body and substantially filled in three dimensions with tessellated unit cells generally as described above. In addition, the additively manufacturing of block 1203 can be executed such that the tessellated unit cells are arranged with respect to one another in a cell map such that a fog-laden airflow moving through the architected lattice from the upstream end to the downstream end exhibits a pressure drop of 2 psi or less and formation of water droplets of 10-40 microns generally as described above.

In accordance with embodiments, the additively manufacturing of block 1203 can include PBF-L processes or other similar processes.

Technical effects and benefits of the present disclosure are the provision of an architected lattice of a lattice coalescer with an additive architected lattice design that provides a novel and compact solution for removing water that is entrained in an airflow. The architected lattice is a passive device that requires no maintenance, adds surface area without a significant impact to pressure drop, provides a relatively rough surface enabled by laser powder bed fusion (PBF-L) that can be hydrophilic and provides tuning flexibility to tune coalescing performance with lattice grading capabilities. As an additive design, the architected lattice enables future part unitization with downstream water extraction components.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A lattice coalescer, comprising:
an architected lattice having a cylindrical shape with an upstream end and a downstream end,
the architected lattice comprising a solid outer body and an interior body disposed within the solid outer body and substantially filled in three dimensions with tessellated unit cells,
the tessellated unit cells being arranged with respect to one another in a cell map such that a fog-laden airflow moving through the architected lattice from the upstream end to the downstream end exhibits a pressure drop of 2 psi or less and formation of water droplets of 10-40 microns.

2. The lattice coalescer according to claim 1, wherein the tessellated unit cells are arranged uniformly throughout the interior body.

3. The lattice coalescer according to any preceding claim, wherein the architected lattice further comprises solid swirl vanes with the tessellated unit cells disposed within interstitial regions between the solid swirl vanes.

4. The lattice coalescer according to claim 1 or 2, wherein the architected lattice further comprises solid concentric rings with the tessellated unit cells disposed within interstitial regions between the solid concentric rings.

5. The lattice coalescer according to any preceding claim, wherein:
the tessellated unit cells have one or more of diamond configurations, body-centered cubic configurations, face-centered cubic configurations and octet configurations, and
the cell map exhibits one or more of rectangular cell mapping, cylindrical cell mapping and spherical cell mapping, and optionally wherein the cell map has one of an axial gradient and a radial gradient.

6. A water extraction system of an environmental control system "ECS" of an aircraft, the water extraction system comprising:
a water extractor;
a duct leading to an inlet of the water extractor; and
a lattice coalescer comprising an architected lattice, which is fittable in the duct and which has an upstream end and a downstream end,
the architected lattice comprising a solid outer body and an interior body disposed within the solid outer body and substantially filled in three dimensions with tessellated unit cells,
the tessellated unit cells being arranged with respect to one another in a cell map such that a fog-laden airflow moving through the architected lattice from the upstream end to the downstream end exhibits a pressure drop of 2 psi or less and formation of water droplets of 10-40 microns.

7. The water extraction system according to claim 6, wherein the tessellated unit cells are arranged with respect to one another in the cell map to encourage radial flows of the water droplets of about ~40 degrees per inch of lattice length toward interior facing walls of the duct.

8. The water extraction system according to claim 6, further comprising:
a first turbine upstream from the duct; and
a second turbine downstream from the water extractor,
wherein the duct and the lattice coalescer are receptive of at least bleed airflow from the first turbine.

9. The water extraction system according to any of claims 6 to 8, wherein the tessellated unit cells of the architected lattice are arranged uniformly throughout the interior body.

10. The water extraction system according to any of claims 6 to 9, wherein the architected lattice further comprises solid swirl vanes with the tessellated unit cells disposed within interstitial regions between the solid swirl vanes, or wherein the architected lattice further comprises solid concentric rings with the tessellated unit cells disposed within interstitial regions between the solid concentric rings.

11. The water extraction system according to any of claims 6 to 10, wherein:
the tessellated unit cells of the architected lattice have one or more of diamond configurations, body-centered cubic configurations, face-centered cubic configurations and octet configurations, and
the cell map of the architected lattice exhibits one or more of rectangular cell mapping, cylindrical cell mapping and spherical cell mapping, and optionally wherein the cell map has one of an axial gradient and a radial gradient.

12. A method of additively manufacturing a lattice coalescer of a water extraction system comprising a water extractor and a duct leading to an inlet of the water extractor, the method comprising:
designing an architected lattice of the lattice coalescer to fit within the duct and to meet requirements for water extraction; and
additively manufacturing the architected lattice according to the designing such that:
the architected lattice comprises a solid outer body and an interior body disposed within the solid outer body and substantially filled in three dimensions with tessellated unit cells, and
the tessellated unit cells are arranged with respect to one another in a cell map such that a fog-laden airflow moving through the architected lattice from the upstream end to the downstream end exhibits a pressure drop of 2 psi or less and formation of water droplets of 10-40 microns.

13. The method according to claim 12, wherein the tessellated unit cells of the architected lattice are arranged uniformly throughout the interior body.

14. The method according to claim 12 or 13, wherein the architected lattice further comprises solid swirl vanes with the tessellated unit cells disposed within interstitial regions between the solid swirl vanes, or wherein the architected lattice further comprises solid concentric rings with the tessellated unit cells disposed within interstitial regions between the solid concentric rings.

15. The method according to any of claims 12 to 14, wherein:
the tessellated unit cells of the architected lattice have one or more of diamond configurations, body-centered cubic configurations, face-centered cubic configurations and octet configurations, and
the cell map of the architected lattice exhibits one or more of rectangular cell mapping, cylindrical cell mapping and spherical cell mapping, and optionally wherein the cell map has one of an axial gradient and a radial gradient.
